# EUROPEAN PATENT SPECIFICATION

(11) **EP 3 127 790 B1**
(45) Date of publication and mention of the grant of the patent: **18.07.2018**
(21) Application number: 16173161.7
(22) Date of filing: 06.06.2016
(51) Int. Cl.: B62D 33/06

(54) **WORK VEHICLE**
ARBEITSFAHRZEUG
VÉHICULE DE TRAVAIL

(30) Priority: 07.08.2015 JP 2015157357; 06.05.2016 JP 2016093324
(43) Date of publication of application: 08.02.2017
(73) Proprietor: Kubota Corporation, Osaka-shi, Osaka 556-8601 (JP)
(72) Inventor: SHINOHARA, Makoto, SAKAI-SHI, OSAKA, 5900823 (JP); KOBAYASHI, Yasunori, SAKAI-SHI, OSAKA, 5900823 (JP); TAHARA, Yoshihisa, SAKAI-SHI, OSAKA, 5900823 (JP); INOUE, Ryuichi, SAKAI-SHI, OSAKA, 5900823 (JP)
(74) Representative: Intès, Didier Gérard André

(56) References cited:
- EP-A1- 2 380 803
- GB-A- 2 168 656
- JP-A- 2008 143 209
- US-A1- 2010 253 115
- US-B1- 6 450 473

## Description

### [Technical Field]

The present invention relates to a work vehicle in which a cabin is supported via an anti-vibration member to a bracket that extends to a vehicle body outer side from a vehicle body frame.

### [Background Art]

As an example of work vehicle of the above-noted type, there is known a work vehicle disclosed in Patent Document 1. In the work vehicle disclosed in Patent Document 1, a cabin is mounted and supported via an anti-vibration member ("an anti-vibration rubber" in the document) to a bracket ("a cabin bracket" in the document) that extends to a vehicle body outer side from a vehicle body frame ("a clutch housing" in the document). At a leading end of the bracket, a weight member ("an anti-vibration weight" in the document) is provided. With this, the natural frequency of the bracket is adjusted by the weight member, thus reducing vibration to be transmitted to the cabin.

### [Background Art Document]

### [Patent Document]

[Patent Document 1] Japanese Unexamined Patent Application Publication No. 2008-143209

### [Summary of the Invention]

### [Problem to be Solved by Invention]

With the above-described conventional work vehicle, however, depending on e.g. a structure of the cabin, the natural frequency of the bracket can be in inadvertent agreement with a space resonance frequency of the cabin or a vibrational frequency of the engine, so that increase of the vibration or noise in the cabin can sometimes occur. Thus, further improvement is desired.

Also, in the bracket, as vibration tends to be greater on the low-frequency side than on the high-frequency side across the natural frequency therebetween, vibration transmission of the anti-vibration member can not be reduced sufficiently in a frequency range on the lower frequency side than the natural frequency. For this reason, if the natural frequency of the bracket is too high, this results in extension of the frequency range where the vibration transmission of the anti-vibration member cannot be reduced sufficiently, thus causing deterioration in the vibration or noise in the cabin.

In view of the above-described state of the art, there is a need for a work vehicle capable of reducing vibration to be transmitted to a cabin via a bracket.

### [Solution]

Accordingly, the present invention relates to a work vehicle as defined in claim 1, in which a cabin is supported via an anti-vibration member to a bracket that extends to a vehicle body outer side from a vehicle body frame, wherein:
the bracket mounts a weight member; and
the weight member is attached to a position in the bracket which position is on more outer vehicle body side than the anti-vibration member, with the weight member protruding to the vehicle body outer side from the bracket.

Accordingly, the weight member is positioned further towards the outer side of the vehicle body than the anti-vibration member. With the above feature, as the distance from the vehicle body frame to the weight member is made longer, the natural frequency of the bracket can be reduced without increasing the weight of the weight member. With this, by reducing the natural frequency of the bracket to a frequency smaller than the space resonance frequency of the cabin or the vibrational frequency of the engine, the vibration to be transmitted to the cabin via the bracket can be reduced. Further, as the natural frequency of the bracket is made lower, vibration transmission of the anti-vibration member can be reduced sufficiently. In this respect too, the vibration to be transmitted to the cabin via the bracket can be reduced.

Further, in the present invention:
the bracket includes an attaching portion having an attaching face to which the weight member is to be attached; and
the weight member is attached to the attaching face in such a manner that only a limited portion of a facing face thereof facing the attaching face is placed in contact with the attaching face.

Here, if the weight member were to be attached to the attaching face with an entire face thereof facing the attaching face being placed in contact with the attaching face, this would require high-accuracy working of the entire facing face, so that additional labor and cost would be required. On the other hand, with the above-described charactering feature, high accuracy working is needed for working only the limited portion of the face that faces the attaching face, so that working labor and cost can be reduced.

Further, in the present invention, preferably:
an area of a contacting portion of the facing face coming into contact with the attaching face is a half or less of an outer circumference area of the facing face as seen in a plan view.

With this characterizing feature, with minimization of the contacting portion, working labor and cost can be effectively suppressed.

Further, in the present invention, preferably:
a contacting portion of the facing face coming into contact with the attaching face is disposed on more vehicle body outer side than a center of the weight member in an extending direction of the bracket.

Thus, the contacting portion is disposed further towards the outer side of the vehicle body than the center of the weight member. With this characterizing feature, the fact that the contacting portion of the facing face coming into contact with the attaching face is disposed on more vehicle body outer side than a center of the weight member in an extending direction of the bracket means that the weight member is attached to the attaching face in a cantilever manner. With this, when the vehicle body vibrates in the vertical direction, the weight member vibrates about the contacting portion in a direction different from the vibrating direction (vertical direction) of the vehicle body (i.e. the horizontal component of the vibration of the weight member is increased). Therefore, vibration of the cabin can be effectively reduced.

Further, in the present invention, preferably:
a contacting portion of the facing face coming into contact with the attaching face is provided to protrude on the attaching face side.

With this characterizing feature, the contacting portion can be provided easily only by causing a portion of the facing face to protrude on the attaching face side.

Further, in the present invention, preferably:
the contacting portion of the facing face coming into contact with the attaching face is provided between width-wise opposed end portions of the facing face that extend perpendicularly to the extending direction of the bracket as seen in a plan view.

With this characterizing feature, when the contacting portion is placed in contact with the attaching face, no looseness will occur in the weight member in the width direction, and the weight member can be firmly attached to the attaching face.

Further, in the present invention, preferably:
in the vertical direction, an attaching position of the weight member relative to the attaching face is set to differ from an attaching position of the anti-vibration member relative to the bracket.

With this characterizing feature, as the attaching positions of the weight member and the anti-vibration member are not limited to a same position in the vertical direction, degree of freedom in the attaching positions of the weight member and the anti-vibration member can be improved.

Further, in the present invention, preferably:
the weight member is disposed to be overlapped with the anti-vibration member as seen in a plan view.

With this characterizing feature, while the weight member is attached to a position in the bracket which position is on more outer vehicle body side than the anti-vibration member, with the weight member protruding to the vehicle body outer side from the bracket, it is still possible to prevent the weight member from protruding on the vehicle body outer side excessively to be obstructive.

Further, in the present invention, preferably:
the bracket includes a protruding portion protruding from the bracket to the vehicle body outer side; and
the weight member is attached to the protruding portion.

With this characterizing feature, in accordance with a length of the protruding portion, the distance from the vehicle body frame to the weight member is increased, so that the natural frequency of the bracket can be even further reduced.

Further, in the present invention, preferably:
the weight member is disposed at a center portion of the bracket in the width direction perpendicular to the extending direction of the bracket as seen in a plan view.

Incidentally, it is understood that the "center portion of the bracket in the width direction" is inclusive of an approximate center of the bracket in the width direction.

With this characterizing feature, the weight member is attached to the bracket with good width-wise weight balance, so that width-wise slanting of the bracket due to vibration or the like will occur less likely.

Further, in the present invention, preferably:
the bracket includes a top plate to which the anti-vibration is to be attached and a pair of side plates provided at the opposed end portions of the bracket in the width direction perpendicular to the extending direction of the bracket as seen in a plan view; and
the side plates are formed to have a vertical length thereof progressively decreased toward the vehicle body outer side.

With this characterizing feature, the rigidness of the vehicle body frame side portion of the bracket (base end portion of the bracket) is increased and also the rigidness of the vehicle body outer side portion of the bracket (leading end portion of the bracket) is reduced. With this, it is possible to ensure required strength of the bracket with the increased rigidness of the bracket at its base end portion and also to reduce the natural frequency of the bracket with the lowered rigidness of the leading end portion of the bracket.

Further, in the present invention, preferably:
the bracket includes an abutment portion against which the cabin can abut.

With this characterizing feature, even when the cabin is vibrated, the abutment portion comes into abutment against the cabin, so that displacement of the cabin can be prevented.

Further, in the present invention, preferably:
the abutment portion is disposed adjacent the weight member in the width direction perpendicular to the extending direction of the bracket as seen in a plan view.

With this characterizing feature, the abutment member can be provided in a compact manner at a position not interfering with the weight member.

### [Brief Description of the Drawings]

[Fig. 1] is a left side view showing a tractor,
[Fig. 2] is a left side view showing a supporting arrangement of a cabin,
[Fig. 3] is a rear view in section showing a front bracket,
[Fig. 4] is a bottom view showing the front bracket,
[Fig. 5] is a perspective view showing the front bracket,
[Fig. 6] is a plan view showing a weight, and
[Fig. 7] is a graph showing a relation between a response acceleration and a frequency of the front bracket.

### [Embodiments of the Invention]

Embodiments of the present invention will be explained with reference to the accompanying drawings.

### [General Configuration of Tractor]

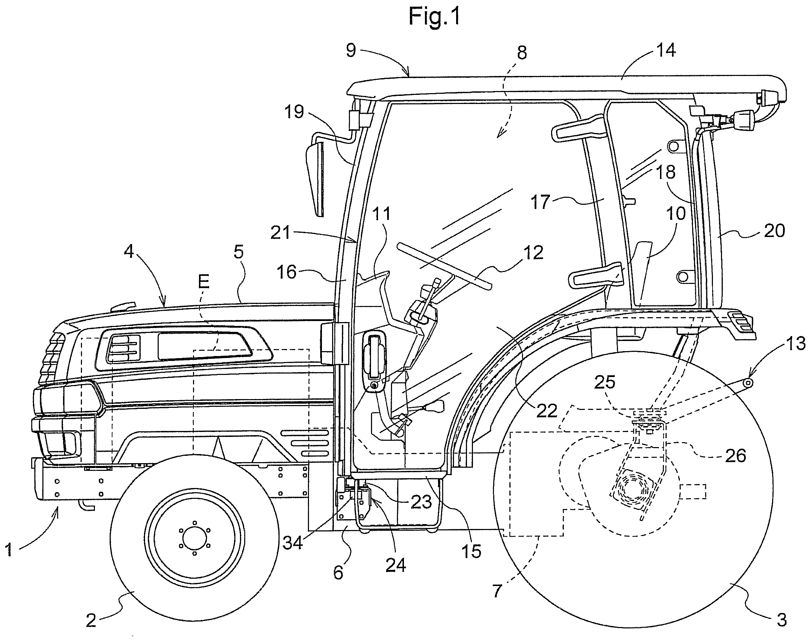

Fig. 1 shows a tractor as an example of "a work vehicle" relating to the present invention. This tractor includes a traveling vehicle body 1 of four-wheel driven type. The traveling vehicle body 1 includes a pair of left and right front wheels 2 that can be driven and steered and a pair of left and right rear wheels 3 that can be driven and braked.

In a front half portion of the traveling vehicle body 1, an engine section 4 is provided. This engine section 4 includes an engine E, etc., with the engine E, etc. being accommodated inside a hood 5. To a rear portion of the engine E, a clutch housing 6 (corresponding to "a vehicle body frame" relating to the present invention) is connected. To a rear portion of the clutch housing 6, a transmission case 7 is connected.

In a rear half portion of the traveling vehicle body 1, there are provided a driving section 8 and a cabin 9 covering the driving section 8. The driving section 8 includes a driver's seat 10, a front panel 11, a steering wheel 12, etc. To a rear end portion of the traveling vehicle body 1, an implement (not shown) such as a rotary cultivator or the like is mounted via a link mechanism 13 to be capable of lifting up/down and rolling actions.

### [Cabin]

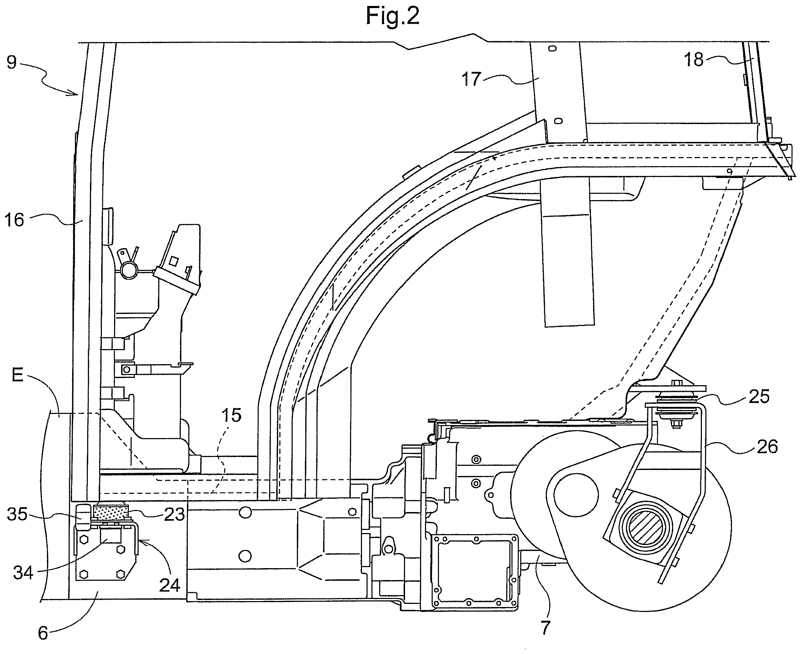

As shown in Fig. 1 and Fig. 2, a roof of the cabin 9 is constituted of a roof portion 14. A floor of the cabin 9 is constituted of a floor panel 15. The roof portion 14 is supported by a pair of left and right front pillars 16, a pair of left and right side pillars 17 and a pair of left and right rear pillars 18.

At a front end portion and a rear end portion of the cabin 9, there are provided a front pane 19 and a rear pane 20, respectively. At the opposed lateral sides of the cabin 9, there are provided a door 21 and a side pane 22. The door 21 has its rear end portion supported to the side pillars 17 so that the door 21 can pivot about a vertically oriented axis to be opened and closed.

A front portion of the cabin 9 is mounted and supported to a pair of left and right front brackets 24 (corresponding to "a bracket" relating to the present invention) via a front anti-vibration rubber 23 (corresponding to "an anti-vibration member" relating to the present invention). A rear portion of the cabin 9 is mounted and supported to a pair of left and right rear brackets 26 via a rear anti-vibration rubber 25.

### [Front Bracket]

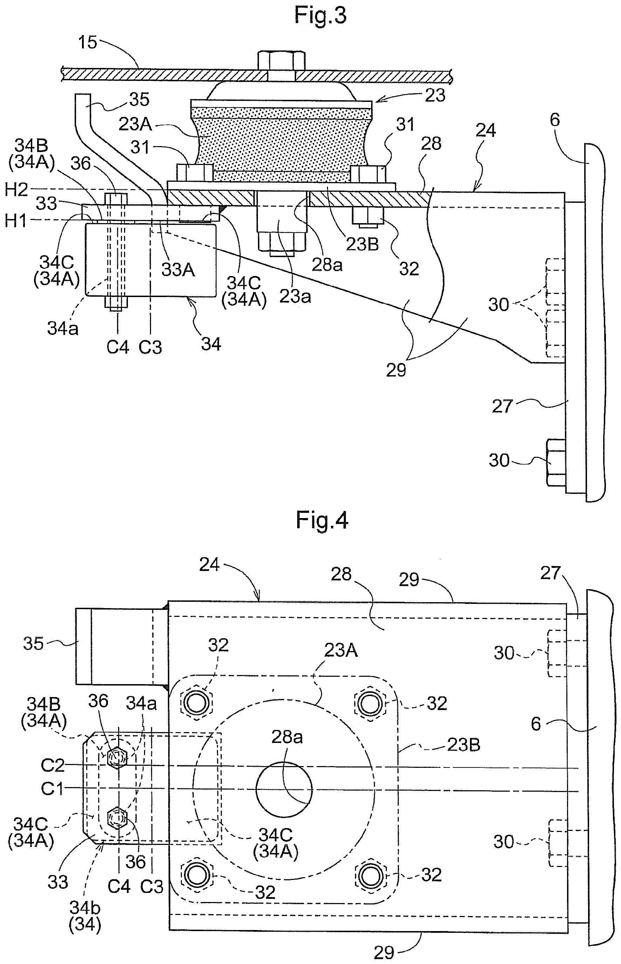

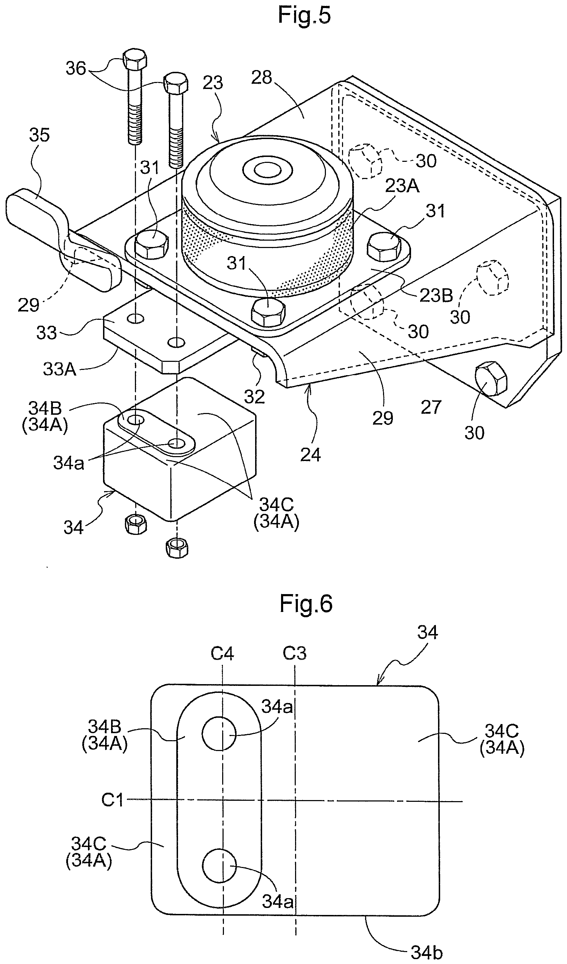

As shown in Figs. 3 through 5, the front bracket 24 extends to a vehicle body laterally outer side from the clutch housing 6. The front bracket 24 includes a fixed plate 27, a top plate 28 and a pair of side plates 29. The fixed plate 27 is fixed to a lateral portion of the clutch housing 6 by bolts 30. To the fixed plate 27, the top plate 28 and the pair of side plates 29 are fixed. The top plate 28 and the pair of side plates 29 are formed integrally by bending a plate-like member into an approximately portal shape.

In the top plate 28, at a portion thereof offset toward the vehicle body laterally outer side, there is formed a fit-in hole 28a into which the anti-vibration rubber 23 is to be fitted. To the lower face of the top plate 28, nuts 32 corresponding to the bolts 31 are fixed by welding.

The side plates 29 extend downward from the front/rear opposed end portions of the top plate 28. Each side plate 29 is formed with a lower side thereof being sloped upwards toward the vehicle body laterally outer side. Namely, the side plate 29 is formed such that its vertical length is progressively decreased toward the vehicle body laterally outer side.

### [Front Anti-vibration Rubber]

The front anti-vibration rubber 23 is bolt-fixed to the floor panel 15. The front anti-vibration rubber 23 includes a main body portion 23A and a flange portion 23B. With a shaft portion 23a of the main body portion 23A being fitted into the fit-in hole 28a, the flange portion 28B is fixed to the top plate 28 with the bolts 31.

### [Protruding Plate]

The front bracket 24 includes a protruding plate 33 (corresponding to "an attaching portion", "a protruding portion" relating to the present invention) protruding to the vehicle body laterally outer side from the front bracket 24. The protruding plate 33 is fixed to a portion of the lower face of the top plate 28 which portion is on more vehicle body laterally outer side than the fit-in hole 28a. The protruding plate 33 includes an attaching face 33A to which a weight 34 (corresponding to "a weight member" relating to the present invention) is to be attached. The attaching face 33A is formed in the lower face of the protruding plate 33.

### [Abutment Plate]

The front bracket 24 includes an abutment plate 35 (corresponding to "an abutment portion" relating to the present invention). The abutment plate 35 can come into abutment against a lower portion (e.g. the floor panel 15) of the cabin 9. The abutment plate 35 is disposed adjacent the weight 34 on the front side and fixed to the vehicle body laterally outer side end of the front bracket 24. The abutment plate 35 is formed of a plate-like member bent in an approximately crank-like shape, with an upper end portion thereof being positioned on more vehicle body laterally outer side than a lower end portion thereof.

### [Weight]

As may be understood from Figs. 3 through 6, the weight 34 is formed of a block made of metal (e.g. lead). The weight 34 is fixed by bolts 36 to the lower face (attaching portion 33A) of the protruding plate 33, with the weight 34 protruding to the vehicle body laterally outer side from the front bracket 24. The weight 34 (protruding plate 33) is disposed at the approximately center portion of the front bracket 24 in a front/rear width direction thereof. Specifically, the weight 34 (protruding plate 33) is disposed at such a position that a front/rear center C1 of the weight 34 (protruding plate 33) is offset slightly toward the rear side relative to a front/rear center C2 of the front bracket 24.

In the weight 34, a pair of bolt holes 34a corresponding to the bolts 36 are formed at positions offset relative to a left/right center C3 of the weight 34. With this, the left/right position of the weight 34 relative to the front bracket 24 can be changed by attaching the weight 34 to the protruding plate 33 under a posture where the pair of bolt holes 34a are disposed on the vehicle body laterally outer side or by attaching the weight 34 to the protruding plate 33 under a posture where the pair of bolt holes 34a are disposed on the vehicle body laterally inner side.

The weight 34 is attached to the attaching face 33A, with only a limited portion (contacting portion 34B) of the facing face 34A facing the attaching face 33A being place in contact with this attaching face 33A. In the attaching face 34A, there are formed the contacting portion 34B of the facing face 34A coming into contact with the attaching face 33A and a non-contacting portion 34C of the facing face 34A not coming into contact with the attaching face 33A. The contacting portion 34B is provided to protrude toward the attaching face 33A side along the front/rear opposed end portions of the facing face 34A.

As seen in a direction perpendicular to the facing face 34A (as seen in a plan view), the area of the contacting portion 34B is a half or less of an outer circumference area of the 34A. In this case, as seen in the plan view, preferably, the area of the contacting portion 34B is 3/4 or less of the outer circumference area of the facing face 34A. Here, it is understood that the language "the outer circumference area of the facing face 34A" refers to the area surrounded by an outer edge 34b as seen in the plan view.

The contacting area 34B is disposed on more vehicle body outer side than the left/right center C3 (corresponding to the "center of the weight member in the extending direction of the bracket" relating to the present invention) of the weight 34. In this case, preferably, the contacting portion 34B is disposed on more vehicle body outer side than a center C4 between the left/right center C3 of the weight 34 and the vehicle body outer end of the weight 34.

In the vertical direction, an attaching position H1 of the weight 34 relative to the attaching face 33A is set at a different position than an attaching position H2 of the front anti-vibration rubber 23 (flange portion 23B) relative to the front bracket 24 (top plate 28). In this embodiment, in the vertical direction, the attaching position H1 is set at a position lower than the attaching position H2.

The weight 34 is provided to be overlapped with the main body portion 23A and the flange portion 23B in the front anti-vibration rubber 23 as seen in a plan view. In this case, preferably, as seen in the plan view, a 1/10 to 1/4 portion of the area surrounded by the outer edge 34b is overlapped with the main body portion 23A of the front anti-vibration rubber 23. Still preferably, a 1/7 to 1/5 portion of the area surrounded by the outer edge 34b is overlapped with the main body portion 23A of the front anti-vibration rubber 23.

### [Relation Between Response Acceleration and Frequency of Front Bracket]

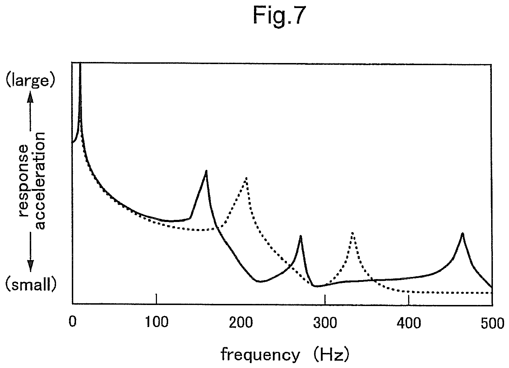

In Fig. 7, the horizontal axis represents the frequency (Hz) and the vertical axis represents the response acceleration of the front bracket 24. Further, in Fig. 7, the solid line is a line plotting response accelerations for respective frequencies of the front bracket 24, whereas the dotted line is a line plotting response accelerations for respective frequencies of a conventional bracket.

Here, as shown in Fig. 7, it is known that the space resonance frequency of the cabin 9 and the vibrational frequency of the engine E generally range from 180 to 200 Hz. And, with the conventional bracket, the natural frequency resides around 200 Hz and with agreement between the natural frequency of the bracket and the space resonance frequency of the cabin 9 or the vibrational frequency of the engine E, amplification of the vibration or noise in the cabin 9 can sometimes happen.

Further, as shown in Fig. 7, with the conventional bracket, there is a tendency of the response acceleration (vibration) being greater on the low frequency side than on the high frequency side, across its natural frequency of 200 Hz. And, in the frequency range on the lower frequency side than the natural frequency 200 Hz, vibration transmission of the anti-vibration member cannot be suppressed sufficiently.

On the other hand, with the front bracket 24, the natural frequency thereof is set adjacent 150 Hz. Thus, by reducing the natural frequency of the front bracket 24 lower than the space resonance frequency of the cabin 9 or the vibrational frequency of the engine E, it is possible to reduce vibration transmitted to the cabin 9 via the front bracket 24. Further, as a result of the natural frequency being lower than the natural vibrational frequency of the conventional bracket, the vibration transmission of the front anti-vibration rubber 23 can be reduced sufficiently. In this respect too, the vibration to be transmitted to the cabin 9 via the front bracket 24 can be suppressed.

### [Other Embodiments]

(1) In the foregoing embodiment, the protruding plate 33 is fixed to the top plate 28. However, the present invention is not limited thereto. For instance, an elongate hole (not shown) can be formed in the protruding plate 33 or the top plate 28, so that with bolt-fixing of the protruding plate 33 to the top plate 28 via this elongate hole, the position of the protruding plate 33 can be made adjustable in either the front/rear direction or the left/right direction or both of these directions. Further, the weight 34 can be directly attached to the front bracket 24, without the protruding plate 33 therebetween.
(2) In the foregoing embodiment, the weight 34 is attached to the front bracket 24. Instead of this or in addition to this, the weight 34 can be attached to the rear bracket 26. In this case, the weight 34 can be attached to a position of the rear bracket 26 which position is on more vehicle body laterally outer side than the rear anti-vibration rubber 25, with the weight 24 protruding toward the vehicle body laterally outer side from the rear bracket 26.
(3) In the foregoing embodiment, the weight 34 (protruding plate 33) is disposed at such position that the front/rear center C2 of the weight 34 (protruding plate 33) is slightly offset toward the rear side relative to the front/rear center C2 of the front bracket 24. However, the present invention is not limited thereto.
   For instance, the weight 34 (protruding plate 33) can be disposed at such position where its front/rear center C1 is in agreement with the front/rear center C2 of the front bracket 24, that is, at the center of the front bracket 24 in the front/rear width direction thereof. Or, it can be disposed at such position where its front/rear center C1 is slightly offset toward the front side relative to the front/rear center C2 of the front bracket 24. Further alternatively, the weight 34 (protruding plate 33) can be disposed at the front end portion or the rear end portion of the front bracket 24 in the front/rear width direction.
(4) In the foregoing embodiment, the side plates 29 are formed with the vertical length thereof progressively decreased toward the vehicle body laterally outer side. Instead, the side plates 29 can be formed such that the vertical length thereof remains same.
(5) In the foregoing embodiment, the abutment plate 35 is provided adjacent on the front side relative to the weight 34. Instead, the abutment plate 35 can be provided adjacent on the rear side relative to the weight 34. Further alternatively, the abutment plate 35 can be omitted entirely.
(6) In the foregoing embodiment, the contacting portion 34B is disposed on more vehicle body outer side than the left/right center C3 of the weight 34. Instead, it can be disposed on more vehicle body inner side than the left/right center C3 of the weight 34. Further alternatively, it can be disposed on the left/right center C3 of the weight 34.
(7) In the foregoing embodiment, in the vertical direction , the attaching position H1 is set at a position lower than the attaching position H2. Instead, the attaching position H1 can be set at a position higher than the attaching position H2. Further alternatively, the attaching position H1 and the attaching position H2 can be set at a same position.
(8) In the foregoing embodiment, the weight 34 is disposed to be overlapped with the main body portion 23A and the flange portion 23B of the front anti-vibration rubber 23 as seen in the plan view. Instead, it can be disposed to be overlapped with only the flange portion 23B of the front anti-vibration rubber 23 as seen in the plan view. Further alternatively, it can be disposed not to be overlapped with the front anti-vibration rubber 23 at all as seen in the plan view.

### [Industrial Applicability]

The present invention is applicable not only to a tractor having a cabin, but also to a combine having a cabin.

### [Description of Reference Numerals/Marks]

6: clutch housing (vehicle body frame)
9: cabin
23: front anti-vibration rubber (anti-vibration member)
24: front bracket (bracket)
28: top plate
29: side plate
33: protruding plate (attaching portion, protruding portion)
33A: attaching face
34: weight (weight member)
34A: facing face
34B: contacting portion
35: abutment plate (abutment portion)
C3: left/right center of weight (center of weight member in extending direction of bracket)
H1: attaching position (attaching position of weight member relative to attaching face)
H2: attaching position (attaching position of anti-vibration member relative to bracket).

## Claims

1. A work vehicle in which a cabin (9) is supported via an anti-vibration member (23) to a bracket (24) that extends to a vehicle body outer side from a vehicle body frame, wherein:
the bracket mounts a weight member(34);
the weight member (34) is attached to a position in the bracket (24) which position is on more outer vehicle body side than the anti-vibration member, with the weight member protruding to the vehicle body outer side from the bracket, **characterised in that** the bracket (24) includes an attaching portion (33) having an attaching face (33A) to which the weight member is to be attached; and
the weight member (34) is attached to the attaching face (33A) in such a manner that only a limited portion (34B) of a facing face (34A) thereof facing the attaching face is placed in contact with the attaching face.

2. The work vehicle according to claim 1, wherein an area of a contacting portion (34B) of the facing face (34A) coming into contact with the attaching face (33A) is a half or less of an outer circumference area of the facing face as seen in a plan view.

3. The work vehicle according to claim 1 or 2, wherein the contacting portion (34B) of the facing face (34A) coming into contact with the attaching face (33A) is disposed on more vehicle body outer side than a center (C3) of the weight member (34) in an extending direction of the bracket (24).

4. The work vehicle according to any one of claims 1-3, wherein the contacting portion (34B) of the facing face (34A) coming into contact with the attaching face (33A) is provided to protrude on the attaching face side.

5. The work vehicle according to any one of claims 1-4, wherein the contacting portion (34B) of the facing face (34A) coming into contact with the attaching face (33A) is provided between width-wise opposed end portions of the facing face that extend perpendicularly to the extending direction of the bracket (24) as seen in a plan view.

6. The work vehicle according to any one of claims 1-5, wherein in the vertical direction, an attaching position of the weight member (34) relative to the attaching face (33A) is set to differ from an attaching position of the anti-vibration member (23) relative to the bracket(24).

7. The work vehicle according to any one of claims 1-6, wherein the weight member (34) is disposed to be overlapped with the anti-vibration member (23) as seen in a plan view.

8. The work vehicle according to any one of claims 1-7, wherein:
the bracket (24) includes a protruding portion (33) protruding from the bracket to the vehicle body outer side; and
the weight member (34) is attached to the protruding portion (33).

9. The work vehicle according to any one of claims 1-8, wherein the weight member (34) is disposed at a center portion of the bracket (24) in the width direction perpendicular to the extending direction of the bracket as seen in a plan view.

10. The work vehicle according to any one of claims 1-9, wherein:
the bracket (24) includes a top plate (28) to which the anti-vibration member (23) is to be attached and a pair of side plates (29) provided at the opposed end portions of the bracket in the width direction perpendicular to the extending direction of the bracket as seen in the plan view; and
the side plates (29) are formed to have a vertical length thereof progressively decreased toward the vehicle body outer side.

11. The work vehicle according to any one of claims 1-10, wherein the bracket (24) includes an abutment portion (35) against which the cabin can abut.

12. The work vehicle according to claim 11, wherein the abutment portion (35) is disposed adjacent the weight member (34) in the width direction perpendicular to the extending direction of the bracket as seen in a plan view.

## Patentansprüche

1. Arbeitsfahrzeug, bei dem eine Kabine (9) über ein Antivibrationselement (23) an einer Halterung (24) gehalten wird, die sich zu einer Fahrzeugkarosserie-Außenseite eines Fahrzeugkarosserierahmens erstreckt, wobei:
die Halterung ein Gewichtselement (34) hält,
das Gewichtselement (34) an einer Stelle an der Halterung (24) befestigt ist, wobei sich die Stelle an einer weiter außen gelegenen Fahrzeugkarosserieseite als das Antivibrationselement befindet, wobei das Gewichtselement von der Halterung zu der Fahrzeugkarosserie-Außenseite hervorsteht, **dadurch gekennzeichnet, dass**
die Halterung (24) einen Befestigungsabschnitt (33) beinhaltet, der eine Befestigungsfläche (33A) aufweist, an der das Gewichtselement befestigt werden soll, und
das Gewichtselement (34) an der Befestigungsfläche (33A) auf derartige Weise befestigt ist, dass nur ein begrenzter Abschnitt (34B) einer Stirnfläche (34A) davon, die der Befestigungsfläche zugewandt ist, in Kontakt mit der Befestigungsfläche angeordnet ist.

2. Arbeitsfahrzeug nach Anspruch 1, wobei ein Bereich eines Kontaktabschnitts (34B) der Stirnfläche (34A), der in Kontakt mit der Befestigungsfläche (33A) kommt, in einer Draufsicht betrachtet eine Hälfte oder weniger eines Außenumfangsbereichs der Stirnfläche ist.

3. Arbeitsfahrzeug nach Anspruch 1 oder 2, wobei der Kontaktabschnitt (34B) der Stirnfläche (34A), der in Kontakt mit der Befestigungsfläche (33A) kommt, in einer Erstreckungsrichtung der Halterung (24) weiter auf der Fahrzeugkarosserie-Außenseite als eine Mitte (C3) des Gewichtselements (34) angeordnet ist.

4. Arbeitsfahrzeug nach einem der Ansprüche 1 - 3, wobei der Kontaktabschnitt (34B) der Stirnfläche (34A), der in Kontakt mit der Befestigungsfläche (33A) kommt, so bereitgestellt ist, dass er auf der Befestigungsflächenseite hervorsteht.

5. Arbeitsfahrzeug nach einem der Ansprüche 1 - 4, wobei der Kontaktabschnitt (34B) der Stirnfläche (34A), der mit der Befestigungsfläche (33A) in Kontakt kommt, zwischen in Breitenrichtung gegenüberliegenden Endabschnitten der Stirnfläche bereitgestellt ist, die sich in einer Draufsicht betrachtet senkrecht zu der Erstreckungsrichtung der Halterung (24) erstrecken.

6. Arbeitsfahrzeug nach einem der Ansprüche 1 - 5, wobei in der vertikalen Richtung eine Befestigungsposition des Gewichtselements (34) in Bezug auf die Befestigungsfläche (33A) so festgelegt ist, dass sie sich von einer Befestigungsposition des Antivibrationselements (23) in Bezug auf die Halterung (24) unterscheidet.

7. Arbeitsfahrzeug nach einem der Ansprüche 1 - 6, wobei das Gewichtselement (34) so angeordnet ist, dass es in einer Draufsicht betrachtet mit dem Antivibrationselement (23) überlappt ist.

8. Arbeitsfahrzeug nach einem der Ansprüche 1 - 7, wobei:
die Halterung (24) einen hervorstehenden Abschnitt (33) beinhaltet, der von der Halterung zur Fahrzeugkarosserie-Außenseite hervorsteht, und
das Gewichtselement (34) an dem hervorstehenden Abschnitt (33) befestigt ist.

9. Arbeitsfahrzeug nach einem der Ansprüche 1 - 8, wobei das Gewichtselement (34) an einem Mittelabschnitt der Halterung (24) in der Breitenrichtung, die in einer Draufsicht betrachtet senkrecht zu der Erstreckungsrichtung der Halterung ist, angeordnet ist.

10. Arbeitsfahrzeug nach einem der Ansprüche 1 - 9, wobei:
die Halterung (24) eine obere Platte (28), an der das Antivibrationselement (23) befestigt werden soll, und ein Paar seitliche Platten (29) umfasst, die an den gegenüberliegenden Endabschnitten der Halterung in der Breitenrichtung, die in einer Draufsicht betrachtet senkrecht zu der Erstreckungsrichtung der Halterung ist, bereitgestellt sind, und
die Seitenplatten (29) so ausgebildet sind, dass eine vertikale Länge davon in Richtung der Fahrzeugkarosserie-Außenseite zunehmend kleiner wird.

11. Arbeitsfahrzeug nach einem der Ansprüche 1 - 10, wobei die Halterung (24) einen Anlageabschnitt (35) umfasst, gegen den die Kabine anliegen kann.

12. Arbeitsfahrzeug nach Anspruch 11, wobei der Anlageabschnitt (35) benachbart zu dem Gewichtselement (34) in der Breitenrichtung, die in einer Draufsicht betrachtet senkrecht zu der Erstreckungsrichtung der Halterung ist, angeordnet ist.

## Revendications

1. Véhicule de travail dans lequel une cabine (9) est supportée par l'intermédiaire d'un élément antivibration (23) sur un support (24) qui s'étend vers un côté extérieur de corps de véhicule depuis un châssis de véhicule, dans lequel :
le support supporte un élément de poids (34) ;
l'élément de poids (34) est fixé dans une position dans le support (24) laquelle position est sur un côté de corps de véhicule plus à l'extérieur que l'élément antivibration, avec l'élément de poids qui dépasse vers le côté extérieur de corps de véhicule depuis le support, **caractérisé en ce que**
le support (24) comprend une partie de fixation (33) ayant une face de fixation (33A) sur laquelle l'élément de poids doit être fixé ; et
l'élément de poids (34) est fixé sur la face de fixation (33A) d'une manière telle que seulement une partie limitée (34B) d'une face en regard (34A) de celle-ci faisant face à la face de fixation est mise en contact avec la face de fixation.

2. Véhicule de travail selon la revendication 1, dans lequel une surface d'une partie de contact (34B) de la face en regard (34A) qui vient en contact avec la face de fixation (33A) est une moitié ou moins d'une surface de circonférence extérieure de la face en regard telle que vue dans une vue en plan.

3. Véhicule de travail selon la revendication 1 ou 2, dans lequel la partie de contact (34B) de la face en regard (34A) qui vient en contact avec la face de fixation (33A) est disposée sur un côté de corps de véhicule plus à l'extérieur qu'un centre (C3) de l'élément de poids (34) dans une direction selon laquelle s'étend le support (24).

4. Véhicule de travail selon l'une quelconque des revendications 1 à 3, dans lequel la partie de contact (34B) de la face en regard (34A) qui vient en contact avec la face de fixation (33A) est prévue pour dépasser du côté de la face de fixation.

5. Véhicule de travail selon l'une quelconque des revendications 1 à 4, dans lequel la partie de contact (34B) de la face en regard (34A) qui vient en contact avec la face de fixation (33A) est prévue entre des parties d'extrémité opposées dans le sens de la largeur de la face en regard qui s'étendent perpendiculairement à la direction selon laquelle s'étend le support (24) telle que vue dans une vue en plan.

6. Véhicule de travail selon l'une quelconque des revendications 1 à 5, dans lequel, dans la direction verticale, une position de fixation de l'élément de poids (34) par rapport à la face de fixation (33A) est prévue pour différer d'une position de fixation de l'élément antivibration (23) par rapport au support (24).

7. Véhicule de travail selon l'une quelconque des revendications 1 à 6, dans lequel l'élément de poids (34) est disposé pour être superposé avec l'élément antivibration (23) tel que vu dans une vue en plan.

8. Véhicule de travail selon l'une quelconque des revendications 1 à 7, dans lequel :
le support (24) comprend une partie saillante (33) qui dépasse depuis le support vers le côté extérieur de corps de véhicule ; et
l'élément de poids (34) est fixé sur la partie saillante (33).

9. Véhicule de travail selon l'une quelconque des revendications 1 à 8, dans lequel l'élément de poids (34) est disposé au niveau d'une partie centrale du support (24) dans la direction de largeur perpendiculaire à la direction selon laquelle s'étend le support tel que vu dans une vue en plan.

10. Véhicule de travail selon l'une quelconque des revendications 1 à 9, dans lequel :
le support (24) comprend une plaque supérieure (28) sur laquelle l'élément antivibration (23) doit être fixé et une paire de plaques latérales (29) prévues au niveau des parties d'extrémité opposées du support dans la direction de largeur perpendiculaire à la direction selon laquelle s'étend le support telle que vue dans la vue en plan ; et
les plaques latérales (29) sont formées pour avoir une longueur verticale progressivement diminuée vers le côté extérieur de corps de véhicule.

11. Véhicule de travail selon l'une quelconque des revendications 1 à 10, dans lequel le support (24) comprend une partie de butée (35) contre laquelle la cabine peut buter.

12. Véhicule de travail selon la revendication 11, dans lequel la partie de butée (35) est disposée de façon adjacente à l'élément de poids (34) dans la direction de largeur perpendiculaire à la direction selon laquelle s'étend le support telle que vue dans une vue en plan.
